# EUROPÄISCHE PATENTANMELDUNG

(11) **EP 1 528 336 A2**
(43) Veröffentlichungstag der Anmeldung: **04.05.2005**
(21) Anmeldenummer: 04025759.4
(22) Anmeldetag: 29.10.2004
(51) Int. Cl.: F24J 2/40, F24J 2/04

(54) **Bauelement mit variierbaren optischen Eigenschaften , Verfahren zur Beeinflussung dessen optischer Eigenschaften sowie dessen Verwendung**

(30) Priorität: 31.10.2003 DE 10351023
(71) Anmelder: FRAUNHOFER-GESELLSCHAFT ZUR FÖRDERUNG DER ANGEWANDTEN FORSCHUNG E.V., 80686 München (DE)
(72) Erfinder: Hermann, Michael, Dipl.-Ing., 79110 Freiburg (DE); Hube, Werner, Dipl.-Ing., 79111 Freiburg (DE); Platzer, Werner, Dr., 79194 Gundelfingen (DE)
(74) Vertreter: Pfenning, Meinig & Partner GbR

(57) **Zusammenfassung**

Bauelement (1) mit variierbaren optischen Eigenschaften, das mindestens ein Innenraum (2) sowie mindestens eine im Wesentlichen transparente Randfläche aufweist, wobei im Innenraum (2) dabei nicht-mischbare Fluide mit unterschiedlichen optischen Eigenschaften enthalten sind. Verfahren zur Beeinflussung der optischen Eigenschaften eines Bauelementes und Verwendung derartige Bauelemente (1) als Sonnenschutz für Fenster-, Fassaden-, Kollektor- und Wandkonstruktionen, ebenso wie als optische Filter und/oder Schalter.

## Beschreibung

Die Erfindung betrifft ein Bauelement mit variierbaren optischen Eigenschaften, das mindestens ein Innenraum sowie mindestens eine im Wesentlichen transparente Randfläche aufweist. Im Innenraum sind dabei nicht-mischbare Fluide mit unterschiedlichen optischen Eigenschaften enthalten. Ebenso betrifft die Erfindung ein Verfahren zur Beeinflussung der optischen Eigenschaften eines Bauelementes. Verwendung finden derartige Bauelemente als Sonnenschutz für Fenster-, Fassaden-, Kollektor- und Wandkonstruktionen, ebenso wie als optische Filter und/oder Schalter.

Aus der AT 389 561 B und der WO 98/51973 sind Fassaden-, Fenster- und Wandkonstruktionen bekannt, durch deren Zwischenräume eine gefärbte oder pigmentierte Flüssigkeit zirkulieren kann. Durch die erhöhte Absorptionsfähigkeit der verwendeten Flüssigkeit ist eine Wärmeenergiegewinnung bei gleichzeitiger Verschattung möglich. Zur Variation der Transmissionsund Absorptionseigenschaft wird in diesen Druckschriften eine aktive Einfärbung der Flüssigkeit durch Zugabe von Farbstoffen oder Pigmenten vorgeschlagen. Das aktive Entfärben erfolgt über das Ausfiltern der Pigmente durch mechanische Filtermethoden, z. B. über Membranfilter, oder chemische Filtermethoden, z. B. Änderung des pH-Wertes. Damit wird eine kontinuierlich veränderliche Gesamtfläche realisiert.

Nachteil dieser Methode ist die Umsetzung der Reversibilität des Prozesskreislaufes. Die mechanischen Filter müssen gereinigt werden, und der Filterkuchen sollte, wenn möglich, dem Prozess wieder zugeführt werden können. Ansonsten muss fortlaufend neuer Farbstoff zur Verfügung gestellt werden. Mechanische Filter stellen zudem im Fluid-Kreislauf einen hohen hydraulischen Widerstand dar.

Die chemische Methode benötigt entsprechende Substanzen (Säure, Base), die der Flüssigkeit zugeführt werden können.

Ausgehend von den hier beschriebenen Nachteilen des Standes der Technik war es Aufgabe der vorliegenden Erfindung, ein Bauelement mit veränderbaren optischen Eigenschaften bereitzustellen, wobei die Änderung der optischen Eigenschaften reversibel möglich sein soll.

Diese Aufgabe wird durch das Bauelement mit den Merkmalen des Anspruchs 1 sowie durch das Verfahren zur Beeinflussung der optischen Eigenschaften eines Bauelementes mit dem Merkmal des Anspruchs 9 gelöst. Die weiteren abhängigen Ansprüche zeigen vorteilhafte Weiterbildungen auf. In den Ansprüchen 16 und 17 sind beispielhafte Verwendungen des erfindungsgemäßen Bauelementes aufgeführt.

Erfindungsgemäß wird ein Bauelement mit variierbaren optischen Eigenschaften bereitgestellt, das mindestens einen Innenraum und mindestens eine wesentliche transparente Randfläche aufweist. Der Innenraum ist dabei mit mindestens zwei nicht-mischbaren Fluiden unterschiedlicher Dichte und unterschiedlicher optischer Eigenschaften unter Ausbildung einer definierten Grenzschicht gefüllt.

Durch die gezielte Befüllung der Konstruktion können zwei oder mehrere Teilflächen verschiedener optischer Eigenschaften mit definierten Grenzflächen geschaffen werden. Dadurch lässt sich beispielsweise die mittlere Transmission eines Fensters oder Absorption eines Kollektors gezielt einstellen. Durch die Nichtmischbarkeit der Fluide mit unterschiedlicher Dichte separieren sich die Fluide unter der Einwirkung der Gravitation. Ein Trenn- und Mischprozess im Kreislauf, z. B. durch Filterung und Rückspülung der Filter bei wässriger Pigmentdispersion, erübrigt sich.

Das Bauelement ist vorzugsweise an einen Fluid-Kreislauf angeschlossen, der den Zu- und Abtransport der Fluide in den Innenraum ermöglicht. So ist eine gezielte Befüllung und Entleerung des Innenraumes, z. B. mittels eines hydraulischen Kreislaufes, möglich. Vorzugsweise weist der Fluid-Kreislauf mindestens eine Pumpe für den Fluid-Transport und/oder Drosselventile auf.

In der Regel sind für jedes Fluid eigene Vorratsbehältnisse vorgesehen. In einer vorteilhaften Weiterbildung können jedoch auch sämtliche Fluide in einem einzigen Vorratsbehältnis enthalten sein. Dies ermöglicht einen vereinfachten Aufbau des Fluid-Kreislaufs, wodurch der Materialaufwand reduziert werden kann.

Vorzugsweise besitzt das Bauelement eine obere Befüllöffnung für das Fluid mit der geringeren Dichte und eine untere Befüllöffnung für das Fluid mit der höheren Dichte. Durch diese gezielte Wahl der Entleerungs- und Befüllungswege (untere bzw. obere Befüllöffnung) kann gezielt ein Fluid dem Behälter entzogen werden. Im Falle zweier Fluide ergibt sich dabei bei langsamer Befüllung von oben (Fluid mit geringerer Dichte) bzw. unten (Fluid mit höherer Dichte) eine nach unten oder oben wandernde Grenzfläche. Dieser Effekt wird als Jalousie-Effekt bezeichnet. Eine aufwendige Trennung der Fluide durch Filtermembranen oder ähnliches ist nicht notwendig, da sich die Fluide selbst bei temporärer Vermischung aufgrund der Nichtmischbarkeit und der Dichteunterschiede selbst wieder entmischen.

Die im Rahmen dieser Anmeldung angesprochenen optischen Eigenschaften betreffen vor allem die Transmission, Reflexion und/oder Absorption.

Die der künstlichen oder natürlichen Strahlungsquelle ausgesetzte Randfläche, die im Wesentlichen transparent ist, besteht vorzugsweise aus Glas oder einem Kunststoff wie Plexiglas.

Bei einem Bauelement mit zwei unterschiedlichen Fluiden wird vorzugsweise als erstes Fluid Wasser und als zweites Fluid Öl verwendet. Das Öl kann dabei mit entsprechenden Farbstoffen oder Pigmenten eingefärbt werden, um die gewünschten optischen Eigenschaften zu erzielen. Als besonders bevorzugtes Öl gilt hierbei Silikonöl.

Die mit der Erfindung verbundenen Vorteile gegenüber den im Stand der Technik beschriebenen Verfahren beruhen vor allem auf:
- Durch die Vermeidung aufwendiger Trennverfahren für Pigmente oder Farben können die Betriebskosten derartiger Systeme deutlich gesenkt werden.
- Eine andauernde Vermischung der Fluide wird unterdrückt.
- Aufgrund der Tatsache, dass keine zusätzlichen Widerstände durch die Verwendung von mechanischen Filtern auftreten, kann der Primärenergieeinsatz aufgrund der geringeren erforderlichen Pumpleistung reduziert werden.
- Durch Veränderung der Farben lassen sich ästhetische oder funktionelle Anpassungen leicht durchführen.
- Zwischenzustände zwischen einem ersten Fluid und einem zweiten Fluid lassen sich leicht einstellen und sind ästhetisch ansprechend, da definierte Teilbereiche der Fluide vorliegen.

Erfindungsgemäß wird ebenso ein Verfahren zur Beeinflussung der optischen Eigenschaften eines Bauelementes mit mindestens einem Innenraum mit mindestens einer im Wesentlichen transparenten Randfläche bereitgestellt. Bei diesem Verfahren wird der Innenraum mit mindestens zwei nicht mischbaren Fluiden unterschiedlicher Dichte und unterschiedlicher optischer Eigenschaften unter Ausbildung einer definierten Grenzschicht befüllt.

Durch den bevorzugten Einsatz eines Fluid-Kreislaufs ist es möglich, einen reversiblen Zu- und Abtransport der Fluide zu realisieren.

Die unterschiedlichen optischen Eigenschaften der Fluide beziehen sich vor allem auf die Transmission, die Reflexion und/oder die Absorption der Fluide. Dabei unterscheiden sich die Fluide vorzugsweise im UV-, sichtbaren (vis)-, Solar- und/oder IR-Bereich.

Verwendung finden die erfindungsgemäßen Bauelemente als Sonnenschutz und/oder Absorber für Fenster-, Fassaden-, Kollektor- und Wandkonstruktionen. Ebenso können auf diese Weise Verglasungen mit variabler Farbe bereitgestellt werden. Ein weiteres Anwendungsfeld betrifft die Solarkollektoren mit variabler Absorption als Möglichkeit zur Vermeidung kritischer Temperaturen bei Stagnation. Weiterhin können die erfindungsgemäßen Bauelemente als optische Filter und/oder Schalter verwendet werden. Dies ermöglicht eine variable optische Filterfunktion in optischen Bauelementen bei Verwendung verschiedenfarbiger Fluide.

Anhand der nachfolgenden Beispiele und Figuren soll der erfindungsgemäße Gegenstand näher erläutert werden, ohne hierdurch eine Beschränkung des durch die Ansprüche festgelegten Schutzbegehrens herbeizuführen.
- Fig. 1: zeigt einen erfindungsgemäßen Versuchsaufbau.
- Fig. 2: zeigt eine schematische Darstellung eines Fluid-Kreislaufs mit einem Tank.
- Fig. 3: zeigt einen Fluid-Kreislauf mit einem einzigen Tank.

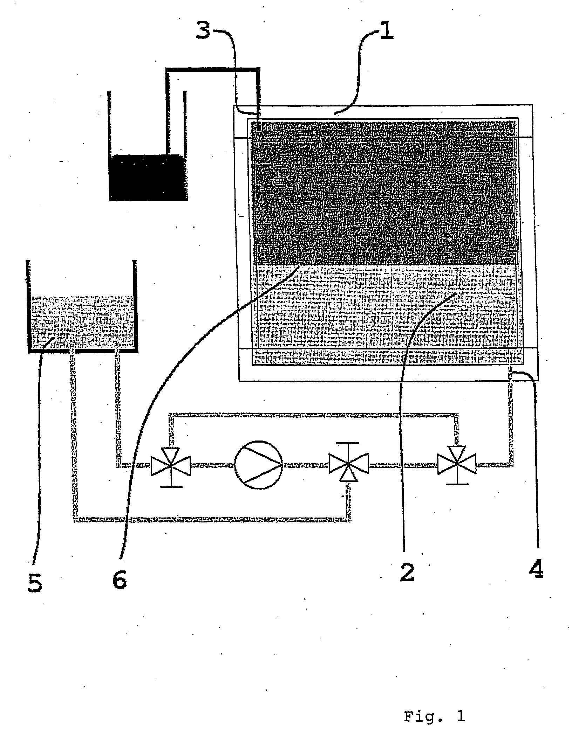

Fig. 1 ist ein erfindungsgemäßes Bauelement in Form einer Plexiglas-Konstruktion 1 mit zugehöriger hydraulischer Verschaltung zur Einschichtung zweier Fluide in einem Scheibenzwischenraum 2 dargestellt. Während in der oberen Befüllöffnung 3 das transparentblau eingefärbte Fluid geringerer Dichte (hier Silikonöl) eingefüllt wurde, wurde an der unteren Befüllöffnung 4 klares Wasser mittels einer Pumpe aus dem Tank 5 eingefüllt. Es kommt zur Ausbildung einer definierten Grenzschicht 6.

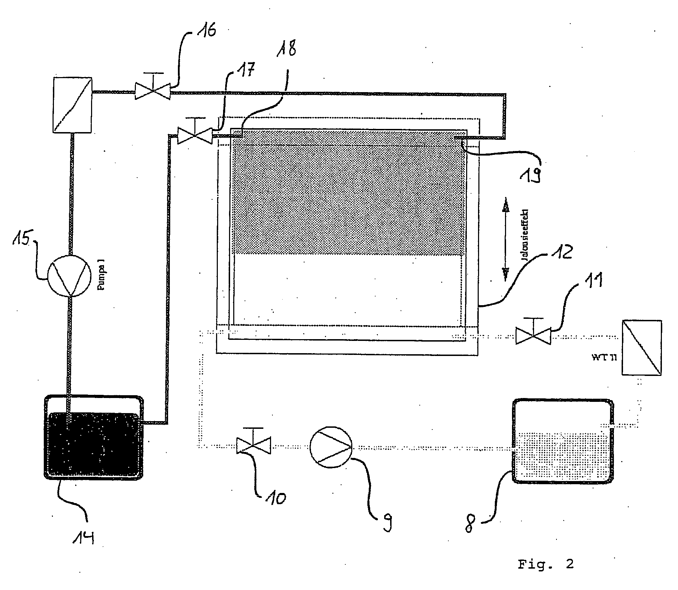

Fig. 2 zeigt ein Fensterelement 7, an das zwei unterschiedliche Fluid-Kreisläufe angeschlossen sind. So enthält Tank 8 ein Fluid B, das mittels einer Pumpe 9 über zwei Drosselventile 10 und 11 und über die Befüllöffnung 12 in den Scheibenzwischenraum befördert wird. Über die Ablauföffnung 13, gelangt das Fluid dann wieder in den externen Fluid-Kreislauf zurück. In diesem unteren Fluid-Kreislauf wird das Fluid mit der höheren Dichte eingesetzt.

Im oberen Fluid-Kreislauf ist in Tank 14 ein weiteres Fluid A enthalten, das mittels der Pumpe 15 über die Drosselventile 16 und 17 sowie letztlich über die obere Befüllöffnung 18 in den Scheibenzwischenraum transportiert wird. Über die Ablauföffnung 19 kann das Fluid aus dem Fensterelement wieder entweichen. In diesem oberen Kreislauf wird in der Regel das Fluid mit der geringeren Dichte eingesetzt.

Durch entsprechende Steuerung der beiden Kreisläufe kann nun die Grenzschicht zwischen Fluid A und Fluid B im Fensterelement definiert eingestellt werden, was zur gleichzeitigen Beeinflussung der optischen Eigenschaften des Bauelements führt.

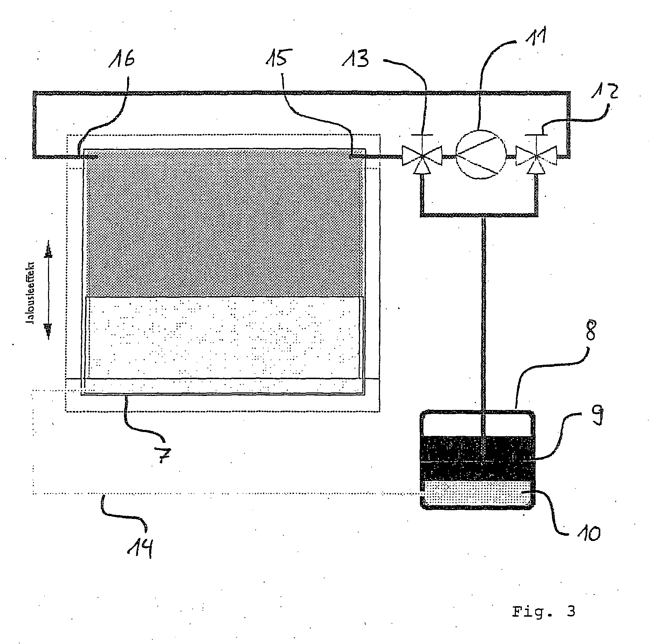

Fig. 3 zeigt einen Fluid-Kreislauf, bei dem lediglich ein Tank 8 eingesetzt wird, indem sowohl das Fluid A 9 und das Fluid B 10 vorliegen. Der Transport der Fluide im Kreislauf erfolgt über die Pumpe 11, wobei die Drosselventile 12 und 13 zur Festlegung der Fluidwege dienen. So kann das Fluid A 9 über das Dreiwegeventil 13 zur Befüllöffnung 15 gelangen. Das Fluid B 10 gelangt über die Befüllöffnung 14 in das Fensterelement.

Diese Variante stellt eine einfache Ausführungsform dar, bei der die Eigenschaft der Entmischung der Flüssigkeiten aufgrund des Dichteunterschiedes auch im Speichertank genutzt wird. Dies führt zu einem reduzierten Materialaufwand.

## Patentansprüche

1. Bauelement mit variierbaren optischen Eigenschaften, das mindestens einen Innenraum und mindestens eine im wesentlichen transparente Randfläche aufweist, wobei der Innenraum mit mindestens zwei nicht-mischbaren Fluide unterschiedlicher Dichte und unterschiedlicher optischer Eigenschaften unter Ausbildung einer definierten Grenzschicht gefüllt ist.

2. Bauelement nach Anspruch 1,
**dadurch gekennzeichnet, dass** das Bauelement an einen Fluid-Kreislauf angeschlossen ist, der den Zu- und Abtransport der Fluide in den Innenraum ermöglicht.

3. Bauelement nach Anspruch 2,
**dadurch gekennzeichnet, dass** der Fluid-Kreislauf mindestens eine Pumpe für den Fluid-Transport und/oder Drosselventile aufweist.

4. Bauelement nach einem der Ansprüche 1 bis 3,
**dadurch gekennzeichnet, dass** das Bauelement mit einem einzigen Vorratsbehältnis verbunden ist, der die mindestens zwei Fluide enthält.

5. Bauelement nach einem der Ansprüche 1 bis 4,
**dadurch gekennzeichnet, dass** das Bauelement eine obere Befüllöffnung für das Fluid mit der geringeren Dichte und eine untere Befüllöffnung für das Fluid mit der höheren Dichte aufweist.

6. Bauelement nach einem der Ansprüche 1 bis 5,
**dadurch gekennzeichnet, dass** die optischen Eigenschaften die Transmission, die Reflexion und/oder die Absorption betreffen.

7. Bauelement nach einem der Ansprüche 1 bis 6,
**dadurch gekennzeichnet, dass** die mindestens eine Randfläche aus Glas oder einem Kunststoff besteht.

8. Bauelement nach einem der Ansprüche 1 bis 7,
**dadurch gekennzeichnet, dass** das erste Fluid Wasser und das zweite Fluid Öl, insbesondere Silikonöl, ist.

9. Verfahren zur Beeinflussung der optischen Eigenschaften eines Bauelements mit mindestens einem Innenraum und mindestens einer im wesentlichen transparenten Randfläche, bei der der Innenraum mit mindestens zwei nicht-mischbaren Fluiden unterschiedlicher Dichte und unterschiedlicher optischer Eigenschaften unter Ausbildung einer definierten Grenzschicht befüllt wird.

10. Verfahren nach Anspruch 9
**dadurch gekennzeichnet, dass** das Bauelement an einen Fluid-Kreislauf angeschlossen wird, mit dem der Zu- und Abtransport der Fluide erfolgt.

11. Verfahren nach einem der Ansprüche 9 oder 10,
**dadurch gekennzeichnet, dass** der Zu- und Abtransport mittels einer Pumpe und/oder Drosselventilen realsiert wird.

12. Verfahren nach einem der Ansprüche 9 bis 11,
**dadurch gekennzeichnet, dass** der Zu- und Abtransport der Fluide reversibel erfolgt.

13. Verfahren nach einem der Ansprüche 9 bis 12,
**dadurch gekennzeichnet, dass** die optischen Eigenschaften der Fluide die Transmission, die Reflexion und/oder die Absorption betreffen.

14. Verfahren nach einem der Ansprüche 9 bis 13,
**dadurch gekennzeichnet, dass** sich die optischen Eigenschaften der Fluide im UV-, vis-, Solarund/oder IR-Bereich unterscheiden.

15. Verfahren nach einem der Ansprüche 9 bis 14,
**dadurch gekennzeichnet, dass** als erstes Fluid Wasser und als zweites Fluid Öl, insbesondere Silikonöl, verwendet wird.

16. Verwendung des Bauelements nach einem der Ansprüche 1 bis 9 als Sonnenschutz für Fenster-, Fassaden-, Kollektor- und Wandkonstruktionen.

17. Verwendung des Bauelements nach einem der Ansprüche 1 bis 9 als optische Filter und/oder Schalter.
